# EUROPEAN PATENT APPLICATION

(11) **EP 1 624 022 A1**
(43) Date of publication of application: **08.02.2006**
(21) Application number: 04731771.4
(22) Date of filing: 07.05.2004
(51) Int. Cl.: C08L 27/12, C08K 3/22, B32B 27/30, G02B 1/10, G02B 1/11

(54) **LIQUID RESIN COMPOSITION, CURED FILM AND LAMINATE**

(30) Priority: 15.05.2003 JP 2003136848; 22.12.2003 JP 2003424975
(71) Applicant: JSR Corporation, Tokyo 104-8410 (JP)
(72) Inventor: TANABE, Takayoshi, Chuo-ku, Tokyo 1048410 (JP); ERIYAMA, Yuichi, Chuo-ku, Tokyo 1048410 (JP); YAMAMURA, Tetsuya, Chuo-ku, Tokyo 1048410 (JP); SUZUKI, Yasunobu, Chuo-ku, Tokyo 1048410 (JP); SHIMOMURA, Hiroomi, Chuo-ku, Tokyo 1048410 (JP); DOIMOTO, Mitsunobu, Chuo-ku, Tokyo 1048410 (JP)
(74) Representative: TBK-Patent
(86) International application number: PCT/JP2004/006508
(87) International publication number: WO 2004/101676

(57) **Abstract**

A liquid resin composition containing (A) fluorine-containing polymer, (B) curable compound, (C) metal oxide particles having a number average particle size of 100 nm or less and (D) a solvent. When the composition is cured, the metal oxide particles (C) are distributed unevenly, the refractive index changes in the thickness direction by 0.05 to 0.8, so that there can be produced a cured film having a bilayer structure substantially consisting of a low-refractivity layer and a high-refractivity layer.

## Description

### Technical Field

The present invention relates to a liquid resin composition, a cured film and a laminate. Particularly, it relates to a liquid resin composition capable of forming a cured film having a low-refractive index layer and a high-refractive index layer in one coating step, a cured film and a laminate.

### Background Art

Together with recent developments in multimedia, various developments are seen in various types of display units (display devices). Among the various types of display units, particularly in those units for outdoor use such as portable units, improvement in the viewability thereof has come to be more and more important. For large-screen displays, there are consumer demands for display units that are easier to view, and such demands themselves pose a technical issue.

It is conventional practice to coat the substrate of a display with an anti-reflection film made of a low-refractivity material as means of improving the viewability of the display. As a method of forming the anti-reflection film, there is known, for example, a method in which a thin film is formed from a fluorine compound by a vapor deposition method. In recent years, mainly in liquid crystal displays, a need is felt for a technique capable of forming an anti-reflection film for a large-screen display at a low cost. In the vapor deposition method, however, it is difficult to form a uniform anti-reflection film highly efficiently on a substrate having a large area, and a vacuum apparatus is required, so that it is difficult to decrease the cost.

Under the circumstances, studies are being made of a method in which a low-refractive fluorinated polymer is dissolved in an organic solvent to prepare a liquid composition and the composition is applied to the surface of a substrate to form an anti-reflection film. For example, it is proposed that a fluorinated alkyl silane be applied to the surface of a substrate (for example, see JP-A-S61-40845 and JP-B-H06-98703). Further, there is proposed a method in which a fluorine-containing polymer having a specific structure is applied (for example, see JP-A-H06-115023).

For these conventional anti-reflection films formed from fluorine-containing materials, it is required to form a low-refractive film made from a fluorine-containing film on a high-refractive film formed on a substrate. It is hence required to separately provide application steps for forming these layers.

Further, the low-refractive layer as a front layer is insufficient in scratch resistance.

The present invention has been made against the foregoing backdrop, and it is an object of the present invention to provide a liquid resin composition capable of efficiently producing a low-refractive layer and a high-refractive layer.

It is another object of the present invention to provide a cured film having high transparency and high adhesion to a substrate and having excellent scratch resistance and wipeability.

### Disclosure of the Invention

The present invention provides the following liquid resin composition, cured film, method of producing a cured film and laminate.
1. A liquid resin composition comprising the following components (A), (B), (C) and (D) :
   (A) fluorine-containing polymer
   (B) curable compound
   (C) metal oxide particles having a number average particle size of 100 nm or less
   (D) solvent.
2. The liquid resin composition according to claim 1, wherein the metal oxide particles are those mainly containing of one or more kinds of metal oxides selected from the group consisting of titanium oxide, zirconium oxide, antimony -containing tin dioxide, tin -containing indium oxide, silicon dioxide, aluminum oxide, cerium oxide, zinc oxide, tin oxide, antimony -containing zinc oxide and indium-containing zinc oxide.
3. The liquid resin composition according to claim 1 or 2, wherein the metal oxide particles are metal oxide particles each having a multilayered structure.
4. A cured film obtained by curing the liquid resin composition recited in claim 1 or 2.
5. The cured film according to claim 4, which has a bilayer structure consisting of one layer in which a high density of the component (C) is present and a layer in which the component (C) is not substantially present or a low density of the component (C) is present.
6. A method for producing a cured film, which comprises the step of curing the liquid resin composition recited in claim 1 or 2 by heating or exposure to radiation.
7. A laminate comprising at least one layer formed of the cured film recited in claim 4 on a substrate.
8. The laminate according to claim 7, which comprises another layer interposed between the layer formed of the cured film and the substrate.
9. The laminate according to claim 8, wherein the other layer is one or more layers selected from the group consisting of a hard coat layer, a layer having a refractive index of 1.5 to 1.7, and a combination of a layer having a refractive index of 1.3 to 1.5 and a layer having a refractive index of 1.6 to 2.2.
10. The laminate according to any one of claims 7 to 9, wherein the substrate is made of triacetyl cellulose, a polyethylene terephthalate resin, a polycarbonate resin, an acrylic resin, an acryl/styrene copolymer resin, a polyolefin resin, a norbornene resin, or glass.
11. The laminate according to any one of claims 7 to 9, which is a part for optical use.
12. The laminate according to any one of claims 7 to 9, which is used for an anti-reflection film.

The liquid resin composition of the present invention can provide a cured film having a low-refractive layer and a high-refractive layer by a single application step when applied and cured, so that it can simplify the process for production of a cured film having a bilayer structure. The liquid resin composition of the present invention can be therefore used particularly advantageously for forming optical materials such as an anti-reflection film and optical fiber-cladding material. Further, having a high fluorine content, the liquid resin composition of the present invention can be suitably used as a painting material for a substrate that is required to have weather resistance, a material for weather-resistant film, a coating material, and other application materials. Furthermore, the above cured film is excellent in adhesion to a substrate, has high scratch resistance and can impart the substrate with a good anti-reflective effect, so that it is significantly useful as an anti-reflection film and can improve viewability when applied to various types of display units.

### Best Mode for Carrying out the Invention

### 1. Liquid resin composition

The liquid resin composition of the present invention comprises the following components (A), (B), (C) and (D):
(A) fluorine-containing polymer
(B) curable compound
(C) metal oxide particles having a number average particle size of 100 nm or less
(D) solvent.

These components will be explained below.

### (A) Fluorine-containing polymer

The fluorine-containing polymer is a polymer having carbon-fluorine bonds in its molecule, and the fluorine content is 30% by weight or more. For example, the fluorine-containing polymer can be suitably selected from among fluorine-containing polymers of any type so long as they have hydroxyl groups in their molecules. For example, the fluorine-containing polymer is preferably a fluorine-containing polymer which contains 10 mol% to 50 mol% of a structural unit derived from a hydroxyl group-containing monomer and contains a polysiloxane segment in its main chain. Preferably, the fluorine-containing polymer has a fluorine content of 30 % by weight or more and has a number average molecular weight, measured as polystyrene, of 5,000 or more. The fluorine-containing polymer is an olefin polymer having a main chain containing a polysiloxane scgmcnt of the following general formula (1), and the ratio of such a polysiloxane segment in the fluorine-containing polymer is generally 0.1 to 20 mol%:

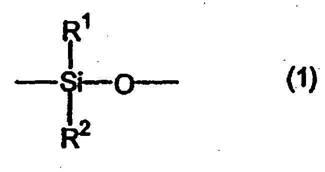

In the formula, R¹ and R² are the same or different to each other, each of which is independently a hydrogen atom, an alkyl group, a halogenated alkyl group or an aryl group.

Further, the fluorine-containing polymer preferably has a fluorine content of 30 % by weight or more, more preferably 40 to 60 % by weight, and preferably has a number average molecular weight, measured as polystyrene by gel permeation chromatography (GPC), of 5,000 or more, more preferably 10,000 to 500,000. The above fluorine content refers to a value measured by the Alizarin Complexone method, and the above number average molecular weight refers to a value measured using tetrahydrofuran as a developing solvent.

The above fluorine-containing polymer can be obtained by reacting (a) a fluorine-containing olefin compound (hereinafter referred to as "component (a)"), (b) a monomer containing hydroxyl groups copolymerizable with the component (a) (hereinafter referred to as "component (b)") and (c) azo group-containing polysiloxane compound (hereinafter referred to as "component (c)") and optionally (d) a reactive emulsifier (hereinafter referred to as "component (d)") and/or (e) a monomer other than the component (b) and copolymerizable with the above component (a).

The fluorine-containing olefin compound as a component (a) can be a compound having at least one polymerizable unsaturated double bond and at least one fluorine atom. Specific examples thereof include (1) fluoroolefins such as tetrafluoroethylene, hexafluoropropyrene and 3,3,3-trifluoropropyrene; (2) perfluoro(alkyl vinyl ethers) and perfluoro(alkoxyalkyl vinyl ethers); (3) perfluoro(alkyl vinyl ethers) such as perfluoro(methyl vinyl ether), perfluoro(ethyl vinyl ether), perfluoro(propyl vinyl ether), perfluoro(butyl vinyl ether) and perfluoro(isobutyl vinyl ether); (4) perfluoro(alkoxyalkyl vinyl ethers) such as perfluoro(propoxy propyl vinyl ether); and the like. These compounds may be used alone or in combination of two or more. Of these, hexafluoropropyrene, perfluoro(alkyl vinyl ether) or perfluoro(alkoxyalkyl vinyl ether) is particularly preferred, and a combination of these compounds is more preferred.

The monomer containing hydroxyl groups as a component (b) includes, for example, (1) hydroxyl group-containing vinyl ethers such as 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 5-hydroxypentyl vinyl ether and 6-hydroxyhexyl vinyl ether; (2) hydroxyl group-containing allyl ethers such as 2-hydroxyethyl allyl ether, 4-hydroxybutyl aryl ether, glycerol monoallyl ether; (3) allyl alcohols; (4) hydroxyethyl (meth)acrylates; and the like. These compounds may be used alone or in combination of two or more. Preferred are hydroxyl group-containing alkyl vinyl ethers.

The azo group-containing polysiloxane compound as a component (c) is a compound containing an azo group represented by -N=N-, which is easily thermally decomposable, and also containing the polysiloxane segment of the above general formula (1). For instance, it can be produced by a method disclosed in JP-A-H06-93100. As a specific example of the component (c), a compound represented by the following general formula (2) may be mentioned.

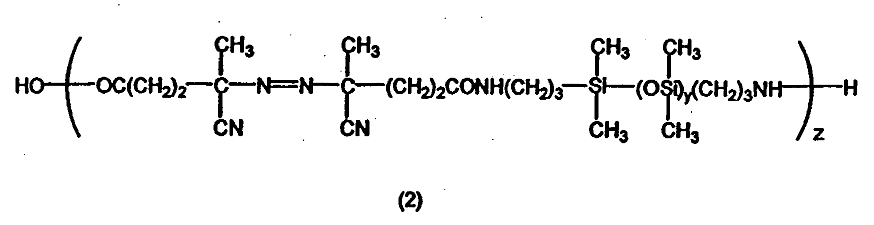

In the formula, y = 10 to 500, and z = 1 to 50.

Preferred combinations of the above-mentioned components (a), (b) and (c) include, for example, (1) fluoroolefin/hydroxyl group-containing alkyl vinyl ether/polydimethylsiloxane unit, (2) fluoroolefin/perfluoro (alkyl vinyl ether)/hydroxyl group-containing alkyl vinyl ether/polydimethylsiloxane unit, (3) fluoroolefin/perfluoro(alkoxyalkyl vinyl ether)/hydroxyl group-containing alkyl vinyl ether/polydimethylsiloxane unit, (4) fluoroolefin/perfluoro(alkyl vinyl ether)/hydroxyl group-containing alkyl vinyl ether/polydimethylsiloxane unit, (5) fluoroolefin/perfluoro(alkoxyalkyl vinyl ether)/hydroxyl group-containing alkyl vinyl ether/polydimethylsiloxane unit.

In the fluorine-containing polymer, the content of the structural unit derived from the component (a) is preferably 20 to 70 mol%, more preferably 25 to 65 mol%, and particularly preferably 30 to 60 mol%. When the content of the structural unit derived from the component (a) is less than 20 mol%, the fluorine content in the resultant fluorine-containing polymer is liable to be too small, so that the resultant liquid resin composition does not easily give a cured product having a sufficiently low refractive index. On the other hand, when the content of the structural unit derived from the component (a) exceeds 70 mol%, not only does the solubility of the resultant fluorine-containing polymer in an organic solvent decrease greatly, but the resultant liquid resin composition has low transparency and little adhesiveness to a substrate.

In the fluorine-containing polymer, the content of the structural unit derived from the component (b) is preferably 10 to 50 mol%. More preferably, the lower limit thereof is 13 mol% or more, more preferably over 20 mol%, or 21 mol% or more. Further, preferably, the upper limit thereof is 45 mol% or less, more preferably 35 mol% or less. When the fluorine-containing polymer having a predetermined content of such a component (b) is used to constitute the liquid resin composition, there can be obtained a cured product having good scratch resistance and wipeability. On the other hand, when the content of the structural unit derived from the component (b) is less than 10 mol%, the fluorine-containing polymer is poor in solubility in an organic solvent. When it exceeds 50 mol%, the resultant cured product from the liquid resin composition is liable to be poor in optical properties such as transparency and low reflectivity.

The azo group-containing polysiloxane compound as a component (c) itself is a heat-radical generating agent and therefore works as a polymerization initiator in the polymerization reaction to obtain the fluorine-containing polymer. However, other radical polymerization initiator may be used in combination with the component (c). The content of the structural unit derived from the component (c) in the fluorine-containing polymer is such that the content of the polysiloxane segment represented by the general formula (1) is preferably 0.1 to 20 mol%, more preferably 0.1 to 15 mol%, still more preferably 0.1 to 10 mol%, particularly preferably 0.1 to 5 mol%. When the content of the polysiloxane segment represented by the general formula (1) exceeds 20 mol%, the resultant fluorine-containing polymer is poor in transparency. Further, when it is used as a coating agent, cissing or the like tends to occur during its application.

Further, it is preferred to use, as a component (d), a reactive emulsifier as a monomer component in addition to the above components (a) to (c). When the fluorine-containing polymer is used as a coating agent, the use of the component (d) can attain good application and leveling properties. As such a reactive emulsifier, it is particularly preferred to use a nonionic reactive emulsifier. Specific examples of the nonionic reactive emulsifier include the compounds represented by the following general formula (3) or the compounds represented by the following general formula (4).

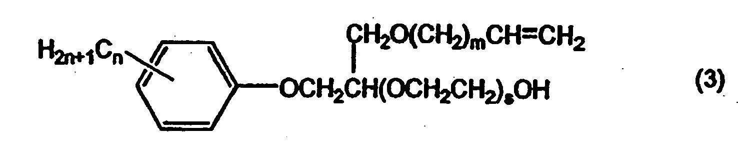

In the formula, n, m and s represent numbers of respective repeating unit, n= 1 to 20, m= 0 to 4, and s= 3 to 50.

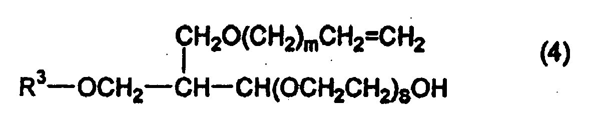

In the formula, m and s are as defined in the general formula (3). R³ is a linear or branched alkyl group, and it is preferably an alkyl group having 1 to 40 carbon atoms.

In the fluorine-containing polymer, the content of the structural unit derived from the component (d) is preferably 0 to 10 mol%, more preferably 0.1 to 5 mol%, and particularly preferably 0.1 to 1 mol%. When the above content exceeds 10 mol%, the resultant liquid resin composition tends to be sticky and is hence hard to handle. When used as a coating agent, the composition gives a coating that is poor in moisture resistance.

The monomer (e) other than the component (b) and copolymerizable with the component (a) includes (1) alkyl vinyl ethers or cycloalkyl vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, n-dodecyl vinyl ether, 2-ethylhexyl vinyl ether and cyclohexyl vinyl ether; (2) carboxylic acid vinyl esters such as vinyl acetate, vinyl propionate, vinyl butyrate, vinyl pivalate, vinyl caproate, vinyl versatate and vinyl stearate; (3) (meth)acrylic acid esters such as methyl (meth)acrylate, ethyl (meth)acrylate, n-butyl (meth)acrylate, isobutyl (meth)acrylate, 2-methoxyethyl (meth)acrylate, 2-ethoxyethyl (meth)acrylate and 2-(n-propoxy)ethyl (meth)acrylate; (4) carboxyl group-containing monomer compounds, which contain no hydroxyl group, such as (meth)acrylic acid, crotonic acid, maleic acid, fumalic acid and itaconic acid. Preferred are alkyl vinyl ethers.

In the fluorine-containing polymer, the content of the structural unit derived from the component (e) is preferably 0 to 70 mol%, and more preferably 5 to 35 mol%. When the content exceeds 70 mol%, the resultant liquid resin composition tends to be sticky and is hence hard to handle. When used as a coating agent, the composition gives a coating that is poor in moisture resistance.

When the component (d) is contained in the fluorine-containing polymer, the combination of the components (a), (b), (c), (d) and (e) is preferably as follows:
(1) fluoroolefin/hydroxyl-group-containing vinyl ether/polydimethylsiloxane unit/nonionic reactive emulsifier/alkyl vinyl ether, (2) fluoroolefin/perfluoro(alkyl vinyl ether)/hydroxyl-group-containing vinyl ether/polydimethylsiloxane unit/nonionic reactive emulsifier/alkyl vinyl ether, (3) fluoroolefin/perfluoro(alkoxyalkyl vinyl ether)/hydroxyl-group-containing vinyl ether/polydimethylsiloxane unit/nonionic reactive emulsifier/alkyl vinyl ether, (4) fluoroolefin/perfluoro(alkyl vinyl ether)/hydroxyl-group-containing vinyl ether/polydimethylsiloxane unit/nonionic reactive emulsifier/alkyl vinyl ether, and (5) fluoroolefin/perfluoro (alkoxyalkyl vinyl ether)/hydroxyl-group-containing vinyl ether/polydimethylsiloxane unit/nonionic reactive emulsifier/alkyl vinyl ether.

Examples of the radical polymerization initiator that can be used in combination with the component (c) include (1) diacyl peroxides such as acetyl peroxide and benzoyl peroxide; (2) ketone peroxides such as methyl ethyl ketone peroxide and cyclohexanone peroxide; (3) hydroperoxides such as hydrogen peroxide, tert-butyl hydroperoxide and cumene hydroperoxide; (4) dialkyl peroxides such as ditert-butyl peroxide, dicumyl peroxide and dilauroyl peroxide; (5) peroxy esters such as tert-butyl peroxy acetate and tert-butyl peroxy pivalate; (6) azo-base compounds such as azobisisobutyronitrile and azobisisovaleronitrile; (7) persulfonates such as ammonium persulfonate, sodium persulfonate and potassium persulfonate; and the like.

Specific examples of radical polymerization initiators other than the above radical polymerization initiator include iodine-containing fluorine compounds such as perfluoroethyl iodide, perfluoropropyl iodide, perfluorobutyl iodide, (perfluorobutyl)ethyl iodide, perfluorohexyl iodide, 2-(perfluorohexyl)ethyl iodide, perfluoroheptyl iodide, perfluorooctyl iodide, 2-(perfluorooctyl)ethyl iodide, perfluorodecyl iodide, 2-(perfluorodecyl)ethyl iodide, heptafluoro-2-iodo-propane, perfluoro-3-methylbutyl iodide, perfluoro-5-methylhexyl iodide, 2-(perfluoro-5-methylhexyl)ethyl iodide, perfluoro-7-methyloctyl iodide, 2-(perfluoro-7-methyloctyl)ethyl iodide, perfluoro-9-methyldecyl iodide, 2-(perfluoro-9-methyldecyl)ethyl iodide, 2,2,3,3-tetrafluoropropyl iodide, 1H,1H,5H-octafluoropentyl iodide, 1H,1H,7H-dodecafluoroheptyl iodide, tetrafluoro-1,2-diiodo-ethane, octafluoro-1,4-diiodo-butane and dodecafluoro-1,6-diiodo-hexane. The iodine-containing fluorine compound may be used alone or in combination with the above-mentioned organic peroxides, azo-based compounds or persulfonates.

As a polymerization method for producing the fluorine-containing polymer, there can be used any one of an emulsion polymerization method, a suspension polymerization method, a mass polymerization method and a solution polymerization method, in which a radical polymerization initiator is used, and the polymerization procedure can be selected from among a batch process, a semi-continuous process, a continuous process or other process as required.

The polymerization reaction to obtain the fluorine-containing polymer is preferably carried out in a solvent system using solvents. The organic solvent that is preferred in this case includes (1) esters such as ethyl acetate, butyl acetate, isopropyl acetate, isobutyl acetate and cellosolve acetate; (2) ketones such as acetone, methyl ethyl ketone, methyl isobutyl ketone and cyclohexanone; (3) cyclic ethers such as tetrahydrofuran and dioxane; (4) amides such as N,N-dimethylformamide and N,N-dimethyl acetamide; (5) aromatic hydrocarbons such as toluene and xylene; and other solvents. Further, alcohols, aliphatic hydrocarbons or the like may be used in combination with the above organic solvent as required.

The thus-obtained fluorine-containing polymer can be sometimes used directly for a liquid resin composition in the form of a reaction solution obtained by the polymerization reaction. However, the polymerization reaction solution may be subjected to optional post-treatment as required. Such post-treatment can be carried out, for instance, by general reprecipitation typified by a purification method in which the polymerization reaction solution is dropwise added to a solvent that insolubilizes the fluorine-containing polymer, such as an alcohol, to coagulate it, and then a solution of the fluorine-containing polymer can be prepared by dissolving the resultant solid copolymer in a solvent. Further, the polymerization reaction solution from which residual monomers have been removed may be directly used as a solution of the fluorine-containing polymer.

### (B) Curable compound

The liquid resin composition may contain a simple mixture of the curable compound with the fluorine-containing polymer, or it may contain a reaction product obtained by the reaction of total amounts of the fluorine-containing polymer with the curable compound or may contain a reaction product obtained by the reaction of part of the fluorine-containing polymer with part of the curable compound in addition to a mixture thereof.

The curable compound includes, for example, various amino compounds, various hydroxyl-group-containing compounds such as pentaerythritol, polyphenols and glycols, and the like.

The amino compound used as the curable compound is a compound having at least two amino groups capable of reacting with hydroxyl groups contained in the fluorine-containing polymer, such as hydroxylalkylamino group or groups and alkoxyalkylamino group or groups. Specifically, the amino compound includes, for example, a melamine-based compound, a urea-based compound, a benzoguanamine-based compound, a glycoluryl-based compound, and other compounds.

The melamine-based compound is generally known as a compound having a skeleton in which nitrogen atoms bond to a triazine ring. Specifically, the melamine-based compound includes melamine, an alkylmelamine, methylolmelamine, alkoxymethylmelamine, etc., and of these, a compound having at least 2 methylol or alkoxymethyl groups or at least 2 methylol and alkoxymethyl groups in total per molecule is preferred. Specifically, methylolmelamine obtained by reacting melamine with formaldehyde under a basic condition, an alkoxymethylmelamine and derivatives thereof are preferred. An alkoxymethylmelamine is particularly preferred from the viewpoint that it gives good storage stability and good reactivity to the liquid resin composition. The methylolmelamine and the alkoxymethylmelamine used as the curable compound are not particularly restricted, and there can be also used, for instance, various kinds of resinous substances which are produced by a method described in "Course of Lectures on Plastic Material [8] Urea and Melamine Resins" published by The Nikkan Kogyo Shinbun Ltd.

The urea-based compound includes, in addition to urea, polymethylolurea, an alkoxymethylurea that is a derivative thereof, methylolurone and an alkoxymethylurone which have an urone ring, etc. Further, there can be also used urea derivatives or other compounds, such as various kinds of resinous substances described in the above literature.

The content of the curable compound per 100 parts by weight of solid content of the liquid resin composition is preferably 70 parts by weight or less, more preferably 3 to 50 parts by weight, particularly preferably 5 to 30 parts by weight. When the content of the curable compound used is too small, the durability of a thin film formed from the resultant liquid resin composition may be sometimes insufficient. When it exceeds 70 parts by weight, it is difficult to avoid occurrence of gelation during the reaction with the fluorine-containing polymer, and the resultant cured product may be sometimes brittle.

The reaction between the fluorine-containing polymer and the curable compound may be carried out, for example, by adding the curable compound to a solution of the fluorine-containing polymer in an organic solvent and stirring the reaction system under heat for an adequate period of time as required while the reaction system is hence homogenized. The heating temperature for this reaction is preferably in the range of 30 to 150°C, more preferably in range of 50 to 120°C. When the heating temperature is below 30°C, the reaction proceeds very slowly. When it exceeds 150°C, undesirably, the desired reaction is accompanied by cross-linking reactions due to reactions among methylol groups and alkoxymethyl groups of the curable compound to generate gel. The progress of the reaction can be quantitatively confirmed by a method in which methylol groups or alkoxymethyl groups are quantitatively determined by an infrared spectroscopic analysis or by recovering a dissolved polymer by a reprecipitation method and determining an increment of the polymer.

Further, the reaction between the fluorine-containing polymer and the curable compound is carried out preferably in the presence of an organic solvent, such as the same organic solvent as that used in the production of the fluorine-containing polymer. In the present invention, the thus-obtained reaction solution from the fluorine-containing polymer and the curable compound can be directly used for a solution of the liquid resin composition, and also various kinds of additives may be added as required before use.

### (C) Metal oxide particles having a number average particle size of 100 nm or less

As the metal oxide particles, there can be used particles composed mainly of one or more metal oxides selected from the group consisting of titanium oxide, zirconium oxide (zirconia), antimony-doped tin dioxide, tin-doped indium oxide, silicon dioxide (silica), aluminum oxide (alumina), cerium oxide, zinc oxide, tin dioxide, antimony-doped zinc oxide and indium-doped zinc oxide can be used. There can be also used metal oxide particles each having a multitiered structure formed by coating each metal oxide particle with one or more other metal oxides different from said metal oxide. Specific examples of the metal oxide particles having a multitiered structure include silica-coated titanium oxide particles, alumina-coated titanium oxide particles, zirconia-coated titanium oxide particles, and the like. Of these metal oxide particles, particles composed mainly of silica, particles composed mainly of titanium oxide or silica-coated titanium oxide particles are particularly preferred.

By the use of the metal oxide particles having a multitiered structure, the photocatalytic activity of titanium oxide can be inhibited, and the resultant cured product can be hence prevented from decomposition. As a result, a cured film having a high reflective index and having excellent light resistance can be obtained.

Further, by the use of antimony-containing tin oxide particles (ATO) or the like, the cured film can be imparted with antistatic properties. In this case, as will be described later, the ATO particles are unevenly distributed in the cured film, so that the use of a smaller amount of the particles can satisfy the need for both effective antistatic properties and good transparency.

The particles composed mainly of silica can be selected from among those which are known. Further, the shape of each particle thereof is not restricted to that of ordinary colloidal silica so long as they are spherical. They may be hollow particles, porous particles, core-shell type particles, or the like. Further, they may be spherical particles or may be amorphous particles. Colloidal silica particles are preferred which have a number average particle size, measured by dynamic light scattering method, of 1 to 100 nm, a solid content of 10 to 40 % by weight and a pH of 2.0 to 6.5.

Further, the dispersion medium is preferably water or an organic solvent. The organic solvent includes alcohols such as methanol, isopropyl alcohol, ethylene glycol, butanol and ethylene glycol monopropyl ether; ketones such as methyl ethyl ketone and methyl isobutyl ketone; aromatic hydrocarbons such as toluene and xylene; amides such as dimethylformamide, dimethylacetamide and N-methylpyrrolidone; esters such as ethyl acetate, butyl acetate and γ-butyrolactone; ethers such as tetrahydrofuran and 1,4-dioxane; etc. Of these, alcohols and ketones are preferred. These organic solvents can be used alone or in a mixture of two or more members of these as the dispersion medium.

As commercially available products of the particles composed mainly of silica, there can be used, for example, SNOWTEX O (trade name) produced by Nissan Chemical Industries Co., Ltd. (number average particle size measured by a dynamic light scattering method: 7 nm, solid content: 20 % by weight, pH2.7), SNOWTEX OL (trade name) (number average particle size measured by a dynamic light scattering method: 15 nm, solid content: 20 % by weight, pH2.5), and so forth.

Further, there can be used colloidal silica which is subjected to surface treatment such as chemical modification or the like. For example, an agent containing a hydrolyzable silicon compound having one or more alkyl groups in one molecule or hydrolysate thereof, or the like may be reacted with colloidal silica surface. Such hydrolyzable silicon compounds include trimethylmethoxysilane, tributylmethoxysilane, dimethyldimethoxysilane, dibutyldimethoxysilane, methyltrimethoxysilane, butyltrimethoxysilane, octyltrimethoxysilane, dodecyltrimethoxysilane, 1,1,1-trimethoxy-2,2,2-trimethyl-disilane, hexamethyl-1,3-disiloxane, 1,1,1-trimethoxy-3,3,3-trimethyl-1,3-disiloxane, α-trimethylsilyl-ω-dimethylmethoxysilyl-polydimethylsiloxane, α-trimethylsilyl-ω-trimethoxysilyl-polydimethylsiloxane, hexamethyl-1,3-disilazane, etc. There may be also used a hydrolyzable silicon compound having one or more reactive groups in a molecule. The hydrolyzable silicon compounds having one or more reactive groups in a molecule include compounds having an NH₂ group as a reactive group such as urea propyltrimethoxysilane and N-(2-aminoethyl)-3-aminopropyltrimethoxysilane, compounds having an OH group such as bis(2-hydroxyethyl)-3-aminotripropylmethoxysilane, compounds having an isocyanate group such as 3-isocyanatepropyltrimethoxysilane, compounds having a thiocyanate group such as 3-thiocyanatepropyltrimethoxysilane, compounds having an epoxy group such as (3-glycidoxypropyl)trimethoxysilane and 2-(3,4-epoxycyclohexyl)ethyltrimethoxysilane and compounds having a thiol group such as 3-mercaptopropyltrimethoxysilane. Preferred compound is 3-mercaptopropyltrimethoxysilane.

The content of metal oxide particles in the liquid resin composition per 100 parts by weight of the solid content thereof is 10 to 100 parts by weight, more preferably 10 to 80 parts by weight.

The number average particle size of the metal oxide particles is 100 nm or less. When the number average particle size exceeds 100 nm, it is sometimes difficult to uniformly disperse the metal oxide particles. Further, the metal oxide particles tend to precipitate, so that the liquid resin composition may be sometimes poor in storage stability. Further, the transparency of the resultant cured film may be degraded, or the turbidity (haze value) thereof may be sometimes increased.

The number average particle size is more preferably 10 to 80 nm, more preferably 20 to 50 nm.

The above term "number average particle size" means a primary particle size when the metal oxide particles coagulate, or when the metal oxide particles are not spherical (for example, needle-shaped ATO, etc.), it is the average of major axis (longitudinal length) and minor axis (lateral length).

### (D) Solvent

Generally, the liquid resin composition may contain the solvent that has been used in the production of the fluorine-containing polymer.

Further, other solvent may be added and blended for the purpose of improving the liquid resin composition in application properties or the like. The preferred solvent to be contained in the liquid resin composition of the present invention includes ketones such as methyl ethyl ketone, methyl isobutyl ketone and cyclohexanone, and esters such as ethyl acetate and butyl acetate. Further, the solution of the fluorine-containing polymer may contain a solvent that does not dissolve the fluorine-containing polymer, namely, poor solvents such as water, alcohols or ethers so long as the fluorine-containing polymer is not precipitated. The fluorine-containing polymer may hence sometimes have good storage stability and preferable application properties. Such poor solvents include ethyl alcohol, isopropyl alcohol, tert-butyl alcohol, ethyl cellosolve, butyl cellosolve, and the like.

### (E) Additives

For improving the liquid resin composition of the present invention in application properties, improving the cured thin film in properties and imparting photosensitivity to the coating film, or the like, the liquid resin composition may contain, for example, various polymers or monomers having a hydroxyl group, a coloring agent such as a pigment or dye, a stabilizer such as an age resister or an ultraviolet absorbent and various additives such as a thermally acid-generating agent, a photosensitive acid generating agent, a surfactant, a polymerization inhibitor and the like. Particularly, for improving the hardness and durability of a cured film to be formed, it is preferred to add a thermally acid-generating agent or photochemically acid-generating agent. It is particularly preferred to select and use those which do not degrade the transparency of a cured product from the liquid resin composition and which are uniformly dissolved in the solution of the liquid resin composition.

### (1) Hydroxyl group-containing polymer

Examples of the hydroxyl group-containing polymer that can be incorporated into the liquid resin composition of the present invention include polymers obtained by copolymerizing a hydroxyl-group-containing monomer such as hydroxyethyl (meth)acrylate, resins having a phenol structure that are known as novolak resins or resol resins, and the like.

### (2) Coloring agent such as pigment or dye

Examples of the coloring agent which can be incorporated into the liquid resin composition of the present invention include (1) extender pigments such as alumina white, clay, barium carbonate and barium sulfate; (2) inorganic pigments such as Chinese white (zinc oxide), zinc white, chrome yellow, red lead, ultramarine blue, iron blue, titanium oxide, zinc chromate, red iron oxide and carbon black; (3) organic pigments such as brilliant carmine 6B, permanent red 6B, permanent red R, benzidine yellow, phthalocyanine blue and phthalocyanine green; (4) basic dyes such as magenta and rhodamine; (5) direct dyes such as direct scarlet and direct orange; (6) acidic dyes such as Roselin and Metanil Yellow; and other pigments or dyes.

### (3) Stabilizers such as antioxidant and ultraviolet absorber

The antioxidant and an ultraviolet absorber that can be incorporated into the liquid resin composition of the present invention can be selected from among those that are known.

Specific examples of the antioxidant include di-tertbutylphenol, pyrogallol, benzoquinone, hydroquinone, methylene blue, tert-butylcatecol, monobenzyl ether, methylhydroquinone, amylquinone, amyloxyhydroquinone, n-butylphenol, phenol, hydroquinone monopropyl ether, 4,4'-{1-[4-(1-(4-hydroxyphenyl)-1-methylethyl)phenyl]ethylidene}diphenol, 1,1,3-tris(2,5-dimethyl-4-hydroxyphenyl)-3- phenylpropane, diphenylamines, phenylenediamines, phenothiazine, mercaptobenzimidazol, and the like.

Further, specific examples of the ultraviolet absorber include salicylic acid-based ultraviolet absorbents typified by phenyl salicylate, benzophenone- based ultraviolet absorbents such as dihydroxybenzophenone and 2-hydroxy-4-methoxybenzophenone, benzotriazole-based ultraviolet absorbents, cyanoacrylate-based ultraviolet absorbents and the like, which are used as additives for various types of plastics.

### (4) Thermally acid-generator

The thermally acid-generator which can be incorporated into the liquid resin composition of the present invention is a substance capable of moderating the heating condition when a coating film or the like from the liquid resin composition is cured under heat. Specific examples of the thermally acid-generator include various aliphatic sulfonic acids and their salts, various aliphatic carboxylic acids such as citric acid, acetic acid and maleic acid and their salts, various aromatic carboxylic acids such as benzoic acid and phthalic acid and their salts, alkyl benzene sulfonic acids and their ammonium salts, various metal salts, phosphoric acid, phosphoric esters of organic acids. The content of the thermally acid-generating agent per 100 parts by weight of the solid content of the liquid resin composition is preferably 0 to 10 parts by weight, more preferably 0.1 to 5 parts by weight. When the above content is too large, the liquid resin composition is degraded in storage stability.

### (5) Photosensitive acid-generator

The photosensitive acid-generator that can be incorporated into the liquid resin composition of the present invention is a substance that can impart a coating formed from the liquid resin composition with photosensitivity so that the coating is optically cured by exposure to radiation such as light. Examples of the photosensitive acid-generating agent include (1) various onium salts such as iodonium salt, sulfonium salt, phosphonium salt, diazonium salt, ammonium salt and pyridinium salt; (2) sulfone compounds such as β-keto ester, β-sulfonylsulfone, β-sulfonylsulfone and α-diazo compounds of these; (3) sulfonic esters such as alkyl sulfonate, haloalkyl sulfonate, aryl sulfonate and iminosulfonate; (4) sulfone imide compounds of the following general formula (5); (5) diazomethane compounds of the following general formula (6); and others.

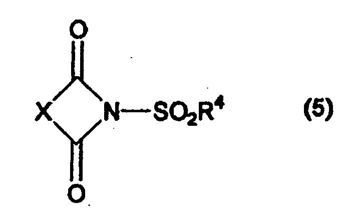

In the formula, X is a divalent group such as an alkylene group, an arylene group or an alkoxylene group, and R⁴ is a monovalent group such as an alkyl group, an aryl group, a halogenated alkyl group, a halogenated aryl group or the like.

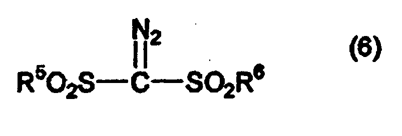

In the formula, R⁵ and R⁶ are the same or different to each other, each of which is independently a monovalent group such as an alkyl group, an aryl group, a halogenated alkyl group, a halogenated aryl group or the like.

As a photosensitive acid-generator, the above compounds can be used alone or in combination of at least two of the compounds, and the photosensitive acid-generator can be also used in combination with the above thermally acid-generator. The content of the photosensitive acid-generator per 100 parts by weight of the solid content of the liquid resin composition is preferably 0 to 20 parts by weight, more preferably 0.1 to 10 parts by weight. When the above content is too large, a cured film is poor in strength and the transparency thereof is also decreased.

### (6) Surfactant

For improving the liquid resin composition of the present invention in coating properties, the liquid resin composition may contain a surfactant. The surfactant can be selected from among those which are known, and specifically, it can be selected from among various anionic surfactants, cationic surfactants and nonionic surfactants. For forming a cured film having excellent strength and excellent optical properties, it is preferred to incorporate a cationic surfactant. Further, quaternary ammonium salts are more preferred, and above all, it is particularly preferred to use a quaternary polyether ammonium salt since the cured film is further improved in wipeability. As a cationic surfactant that is a quaternary polyether ammonium salt, ADEKA COL CC-15, CC-36 and CC-42 supplied by Asahi Denka Co., Ltd. are available. The content of the surfactant per 100 parts by weight of the liquid resin composition is preferably 5 parts by weight or less.

### (7) Polymerization inhibitor

Examples of the thermal polymerization inhibitor that can be incorporated into the liquid resin composition of the present invention include pyrogallol, benzoquinone, hydroquinone, methylene blue, tert-butyl catechol, monobenzyl ether, methylhydroquinone, amylquinone, amyloxyhydroquinone, n-butyl phenol, phenol, hydroquinone monopropyl ether, 4,4'-[1-[4-(1-(4-hydroxyphenyl)-1-methylethyl)phenyl]ethylidene]diphenol and 1,1,3-tris(2,5-dimethyl-4-hydroxyphenyl)-3-phenylpropane. The content of the above thermal polymerization inhibitor per 100 parts by weight of the liquid resin composition is preferably 5 parts by weight or less.

### 2. Cured film

When a cured film is formed from the liquid resin composition of the present invention, preferably, the liquid resin composition is applied to a substrate (member to which the same is applied). The method for such coating can be selected from among a dipping method, a spraying method, a bar coating method, a roll coating method, a spin coating method, a curtain coating method, a gravure printing method, a silk-screen printing method, an inkjet method, and the like.

Further, the means for curing the liquid resin composition is not specially limited, either. For example, heating is preferred. In this case, preferably, the heating is carried out at 30 to 200°C for 1 to 180 minutes. When the heating is carried out in the above manner, a cured film excellent in anti-reflective properties can be more efficiently obtained without damaging the substrate or the cured film formed. More preferably, the heating is carried out at 50 to 180°C for 2 to 120 minutes, and still more preferably, it is carried out at 80 to 150°C for 5 to 60 minutes.

Further, the liquid resin composition can be also cured by exposure to radiation. In this case, the curing is carried out, for example, with an ultraviolet irradiation apparatus (a metal halide lamp, a high-pressure mercury lamp, etc.) under an irradiation condition of 0.001 to 10 J/cm², but the irradiation conditions are not be limited to these. As an irradiation condition, 0.01 to 5 J/cm² is more preferred, and 0.1 to 3J/cm² is further preferred.

The curing degree of the cured film, when a melamine compound is used as a curing compound, can be quantitatively confirmed by infrared spectroscopic analysis of methylol group or alkoxymethyl group of the melamine compound or by measuring a gel fraction with a Soxhlet extractor.

In the process of evaporation of the solvent from the applied liquid resin composition, the metal oxide particles (C) are unevenly distributed on the undercoat layer side (in the vicinity of an adjacent layer) or on the side opposed thereto. Therefore, metal oxide particles are densely distributed in the vicinity of one side of the cured film, and metal oxide particles are substantially absent or less densely distributed in the vicinity of the other side of the cured film, so that a low-refractive resin layer is formed. Therefore, it is possible by curing a single liquid resin composition to obtain a cured film that has a substantially bilayer structure.

The cured film of the present invention can be formed so that it has a low-refractive layer substantially containing the above components (A) and (B) alone and a high-refractive layer containing the above components (A), (B) and (C).

In the thus-obtained cured film, preferably, the refractive index changes in the thickness direction by 0.05 to 0.8, more preferably, by 0.1 to 0.6. Further, preferably, the above change in refractive index includes a dominant change in the vicinity of a boundary between the above substantially bilayer structure.

The degree of change of the refractive index can be adjusted depending upon the content and type of the metal oxide particles, the content and composition of the fluorine-containing polymer and the content and type of the curable compound.

Further, in the cured film, for example, the refractive index of the low-refractive portion is 1.3 to 1.5, and the refractive index of the high-refractive portion is 1.6 to 2.2.

### 3. Laminate

The liquid resin composition of the present invention can be applied to various substrates when it is in the form of a solution, and a laminate can be obtained by curing a coating of the applied liquid resin composition. For example, when the substrate is a transparent substrate, an excellent anti-reflection film is formed.

The anti-reflection film specifically has a structure in which a substrate, a high-refractive film and a low-refractive film are stacked in this order. Concerning the cured film obtained using the liquid resin composition of the present invention, a high-refractive film and a low-refractive film can be formed on a substrate from the liquid resin composition by a single step, so that the production process can be simplified.

In the anti-reflection film, the thickness of the cured film of the present invention is, for example, 0.05 µm to 50 µm, although the thickness is not limited to this range.

Specific examples of the transparent substrate material include various transparent plastic plates, films, etc., such as triacetyl cellulose, a polyethylene terephthalate resin (Lumirror, supplied by Toray Industries, Inc., etc.), glass, a polycarbonate resin, an acrylic resin, a styryl resin, an allylate resin, a norbornene-based resin (ARTON, supplied by JSR Co., Ltd.), a methyl methacrylate/styrene copolymer resin and a polyolefin resin (ZEONEX, supplied by ZEON CORPORATION, etc.). Triacethyl cellulose, a polyethylene terephthalate resin (Lumirror, supplied by Toray Industries, Inc., etc.) and a norbornene resin (ARTON, supplied by JSR Co., Ltd.) are preferred.

Another layer or layers may be interposed between the substrate and the cured film. For example, there may be provided a hard coating layer, an intermediate-refractive layer (refractive index 1.5 to 1.7), a layer formed of a combination of a low-refractive layer (1.3 to 1.5) and a high-refractive layer (1.6 to 2.2), etc.

Further, an antistatic layer may be provided. In this case, there can be obtained an anti-reflection film having antistatic properties without incorporating electrically conductive particles such as ATO particles into the cured film obtained by curing the liquid resin composition of the present invention. The antistatic layer includes a curable film containing metal oxide particles having electric conductivity such as ATO, or organic or inorganic electrically conductive compound, a metal oxide film obtained by vapor-depositing or sputtering the above metal oxide and a film formed of an electrically conductive organic polymer. Examples of the electrically conductive organic polymer include a polyacethylene-based electrically conductive polymer, a polyaniline-based electrically conductive polymer, a polythiophene-based electrically conductive polymer, a polypyrrole-based electrically conductive polymer and a polyphenylene vinylene-based electrically conductive polymer, and a polythiophene-based polymer such as polythiophene is preferred.

For these layers, a single layer alone may be formed, or two or more different layers may be formed.

As an application method for forming these layers, known application methods can be employed. Particularly, there can be employed any of various methods such as a dip coating method, a coater-applied method, a printing method, and the like.

Further, the coating formed by application of the liquid resin composition is particularly preferably provided with a thermal history by heating, in order to cure the coating for forming a cured film having excellent optical properties and durability. When the coating formed by the application is left at room temperature, naturally, the curing reaction proceeds with the passage of time, and the intended cured film is formed. Practically, however, curing the above coating by heating is effective for decreasing the required time period. Further, a thermal acid-generating agent may be incorporated in advance as a curing catalyst, and in this case, the curing reaction can be further promoted. The above curing catalyst is not specially limited, and can be selected from among the above various acids and salts thereof which are used as curing catalysts for general urea resins, melamine resins, and the like. Ammonium salt is particularly preferably used. While the heating conditions for the curing reaction can be selected as required, the heating temperature is required to be not higher than the heat-resistance limit temperature of the substrate to which the liquid resin composition is applied.

With regard to the cured film obtained by curing the liquid resin composition of the present invention, a high-refractive layer and a low-refractive layer can be formed by a single application step, so that the process for producing the cured film can be simplified.

Further, the metal oxide particles are unevenly distributed, so that the cured film can be improved in scratch resistance.

The laminate of the present invention not only can be applied to an anti-reflection film, but also can be applied to optical parts such as lenses, selective transmission film filters, and the like.

### Examples

Examples of the present invention will be explained below, but the present invention is not limited by these Examples. In the following explanation, further, "part" and "%" stand for "part by weight" and "% by weight" unless otherwise specified.

### Preparation Example 1

### Dispersion of silica-coated TiO₂ particles (S-1)

350 Parts by weight of a silica-coated titanium oxide fine powder, 80 parts by weight of an ethylene oxide-propylene oxide copolymer (average polymerization degree: approximately 20), 1,000 parts by weight of isopropyl alcohol and 1,000 parts of butyl cellosolve were mixed and dispersed with glass beads for 10 hours. The glass beads were removed to give 2,430 parts by weight of dispersion (S-1) of silica-coated titanium oxide particles. The obtained dispersion of silica-coated TiO₂ particles was weighed on an aluminum dish and dried on a hot plate at 120°C for 1 hour, and the dry dispersion was measured for a total solid content concentration to show 17 % by weight. Further, this silica-coated TiO₂ particle dispersion(S-1) was weighed and placed in a porcelain crucible, pre-dried on a hot plate at 80°C for 30 minutes and fired in a muffle furnace at 750°C for 1 hour. The inorganic content of the total solid content was determined on the basis of the amount of the resultant inorganic residue and the total solid content concentration and found to be 82 % by weight.

### Preparation Example 2

### Preparation of particles formed mainly of silica

Thirty kilograms of a colloidal silica aqueous dispersion (trade name: SNOWTEX-O, supplied by Nissan Chemical Industries, Ltd.) having a solid content of 20 % by weight, a pH of 2.7, a specific surface area, measured by the BET method, of 226 m²/g and a "silanol-on-silica-particles" concentration, determined by a methyl red adsorption method, of 4.1 x 10⁻⁵ mol/g and having an Na content of 4.6 ppm, a Ca content of 0.013 ppm and a K content of 0.011 ppm as metal contents in a solvent determined by an atomic absorption method was placed in a tank, heated to 50°C and concentrated at a circulation flow rate of 50 liters/minute under a pressure of 1 kg/cm² with an ultrafiltration membrane module (supplied by Try Tech K.K.) and an ultrafiltration membrane made of alumina (trade name: Ceramic UF Element, specifications: 4 mmφ, 19 holes, length 1 m, molecular cutoff = 150,000, membrane area = 0.24 m², supplied by NGK Insulators Ltd.). When 10 kg of a filtrate was discharged after 0.5 hour, the solid content came to be 30 % by weight. The average flux (membrane permeation weight per unit area of the ultrafiltration membrane and per unit hour) before the concentration was 90 kg/m²/hour, and it was 55 kg/m²/hour when the concentration was finished. The number average particle size, determined by a dynamic light scattering method, was 11 nm, and there was no difference between data found before the concentration and data found after the concentration.

After completion of the above step, 14 kg of methanol was added, the mixture was concentrated at a temperature of 50°C at a circulation flow rate of 50 liters/minute under a pressure of 1 kg/cm² with the above ultrafiltration module and ultrafiltration membrane, and 14 kg of a filtrate was discharged. These procedures were repeated 6 times, whereby there was prepared 20 kg of a dispersion of colloidal silica in methanol having a solid content of 30 % by weight, a water content, measured by the Karl Fischer technique, of 1.5 % by weight and a number average particle size, measured by a dynamic light scattering method, of 11 nm. The average flux in the procedures that were carried out six times was 60 kg/m²/hour, and the procedures took 6 hours. The obtained dispersion of colloidal silica in methanol had a specific surface area, measured by the BET method, of 237 m²/g and a "silanol-on-silica-particles" concentration, determined by a methyl red adsorption method, of 3.5 x 10⁻⁵ mol/g.

### Preparation Example 3

### Preparation of silica particle sol

To 20 kg of the dispersion of colloidal silica in methanol prepared in Preparation Example 2 was added 0.6 kg of trimethylmethoxysilane (supplied by Dow Corning Toray Co., Ltd.), and the mixture was stirred under heat at 60°C for 3 hours. The number average particle size, determined by a dynamic light scattering method, was 11 nm, and there was found no change from data obtained before the treatment. The resultant dispersion of hydrophobic-nature-imparted colloidal silica in methanol had a specific surface area, measured by the BET method, of 240 m²/g and a "silanol-on-silica-particles" concentration, determined by a methyl red adsorption method, of 2.1 x 10⁻⁵ mol/g.

After completion of the above step, 14 kg of methyl ethyl ketone (MEK) was added, the mixture was concentrated at a temperature of 50°C at a circulation flow rate of 50 liters/minute under a pressure of 1 kg/cm² with the above ultrafiltration membrane, and 14 kg of a filtrate was discharged. These procedures were repeated 5 times, whereby there was prepared 20 kg of a dispersion of the hydrophilic-nature-imparted colloidal silica in MEK having a solid content of 30 % by weight, a water content, determined by the Karl Fischer technique, of 0.3% by weight, a methanol content, determined by gas chromatography, of 3.2 % by weight and a number average particle size, measured by a dynamic light scattering method, of 11 nm. The average flux in the procedures that were carried out 5 times was 70 kg/m²/hour, and the procedures took 4 hours. The obtained dispersion of colloidal silica in MEK had a specific surface area, measured by the BET method, of 230 m²/g and a "silanol-on-silica-particles" concentration, determined by a methyl red adsorption method, of 1.8 x 10⁻⁵ mol/g. The metal content in the solvent of the dispersion of the hydrophilic-nature-imparted colloidal silica in MEK, measured by an atomic absorption method, was very small, as small as a Na content of 0.05 ppm and Ca and K contents of 0.001 ppm.

### Preparation Example 4

### Preparation of reactive silica particle sol (S-2)

A mixture containing 3.7 parts of 3-mercaptopropyltrimethoxysilane, 93.2 parts (28 parts as silica particles) of the silica particle sol prepared in Preparation Example 3 and 0.25 part of ion-exchanged water was stirred at 60°C for 3 hours, then, 2.9 parts of methyl orthoformate was added, and the mixture was further stirred under heat at the same temperature for 1 hour, to give reactive particles (dispersion (S-2)). On an aluminum dish, 2 g of the dispersion (S-2) was weighed and dried on a hot plate at 175°C for 1 hour, followed by measurement for a solid content, to show 31 % by weight.

### Preparation Example 5

### Preparation of fluorine-containing polymer

The atmosphere in an autoclave made of stainless steel, which had an internal volume of 1.5 liters and had an electromagnetic mixer, was fully replaced with nitrogen gas, and then the autoclave was charged with 500 g of ethyl acetate, 43.2 g of perfluoro(propyl vinyl ether), 41.2 g of ethyl vinyl ether, 21.5 g of hydroxyethyl vinyl ether, 40.5 g of "Adeka Reasoap NE-30" (supplied by Asahi Denka Co., Ltd.) as a nonionic reactive emulsifier, 6.0 g of "PVS-1001" (supplied by Wako-Purechemical Ind. Co., Ltd.) as an azo-group-containing polydimethylsiloxane and 1.25 g of lauroyl peroxide. The mixture was cooled to -50°C with dry ice-methanol, and oxygen in the system was again removed with nitrogen gas.

Then, 97.4 g of hexafluoropropyrene was added, and increasing the temperature of the mixture was started. When the temperature in the autoclave reached 60°C, a pressure of 5.3 x 10⁵ Pa was found. Then, the reaction was continued with stirring at 70°C for 20 hours, and when the pressure decreased to 1.7 × 10⁵ Pa, the autoclave was cooled with water to terminate the reaction. After the temperature reached room temperature, unreacted monomer was discharged, and the autoclave was opened to give a polymer solution having a solid content concentration of 26.4 %. The thus-obtained polymer solution was poured into methanol to precipitate a polymer, and the polymer was washed with methanol and vacuum-dried at 50°C to give 220 g of a fluorine-containing polymer.

It was found that the thus-obtained polymer had a number average molecular weight (Mn), measured by gel permeation chromatography as a polystyrene, of 48,000, had a glass transition temperature (Tg), measured by DSC, of 26.8°C and had a fluorine content, measured by an alizarin complexometric method, of 50.3 %.

The following Examples 1 and 2 show examples of the preparation of the liquid resin composition of the present invention.

### Example 1

### Preparation of liquid resin composition 1

24 Grams of the silica-coated titanium oxide dispersion (S-1) obtained in Preparation Example 1, 2 g of the fluorine-containing polymer obtained in Preparation Example 5, 1.2 g of hexa(methoxymethyl)melamine "Cymel 303" (supplied by Mitsui Cytec, Ltd.) as a crosslinking compound and 0.68 g of Catalyst 4050 (aromatic sulfonic acid compound, supplied by Mitsui Cytec, Ltd.) as a curing catalyst were dissolved in a solvent containing 32 g of methyl ethyl ketone, 24 g of methyl isobutyl ketone and 16 g of tertiary butanol, to give a liquid resin composition 1. The liquid resin composition was measured for a total solid content concentration in the same manner as in Preparation Example 1 to show 7.5 % by weight.

### Example 2

### Preparation of liquid resin composition 2

4.3 Grams of the reactive silica fine powder sol (S-2) obtained in Preparation Example 4, 5.6 g of the fluorine-containing polymer obtained in Preparation Example 5, 1.7 g of hexa(methoxymethyl)melamine "Cymel 303" (supplied by Mitsui Cytec, Ltd.) as a crosslinking compound and 0.63 g of Catalyst 4050 (aromatic sulfonic acid compound, supplied by Mitsui Cytec, Ltd.) as a curing catalyst were dissolved in 208 g of methyl ethyl ketone, to give a liquid resin composition 2. The liquid resin composition was measured for a total solid content concentration in the same manner as in Preparation Example 1 to show 4 % by weight.

Table 1 shows compositions and total solid content concentrations of the liquid resin compositions obtained in Examples 1 and 2.

The following Examples 3 and 4 show examples of the preparation of a cured film in the present invention.

### Example 3

The liquid resin composition prepared in Example 1 was applied to an easy-adhesion-treated surface or non-treated surface of a one-side easy-adhesion polyethylene terephthalate film A4100 (thickness 188 µm, supplied by Toyobo Co., Ltd.) with a wire bar coater (#3), and the formed coating was dried in an oven at 120°C for 10 minutes to give a 0.2 µm thick cured film.

### Example 4

The liquid resin composition prepared in Example 2 was applied to an easy-adhesion-treated surface or non-treated surface of a one-side easy-adhesion polyethylene terephthalate film A4100 (thickness 188 µm, supplied by Toyobo Co., Ltd.) with a wire bar coater (#3), and the formed coating was dried in an oven at 120°C for 10 minutes to give a 0.1 µm thick cured film.

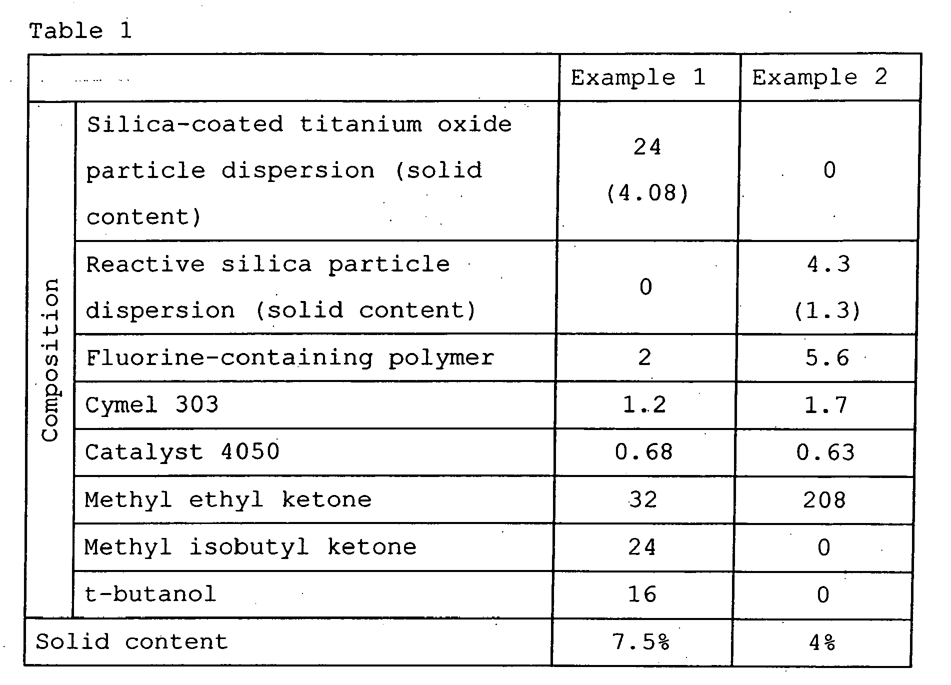

### Evaluation Example

The cured film obtained in Examples 3 and 4 were evaluated on the basis of the following ratings. Table 2 shows the results.

### (1) Layer separation

Cross-section pieces having a thickness of 70 nm were prepared from the obtained laminates, and each piece was observed through a transmission electron microscope of 30,000 magnifications (JEM-2010F, supplied by JEOL) and evaluated on the basis of the following ratings. Table 2 shows the results.
○: A cured layer of liquid resin composition of the present invention is clearly separated into a layer having a high density of metal oxide particles and a layer having substantially no metal oxide particles.
Δ: While the density of the metal oxide particles differs in the layer thickness direction, no clear separation into two layers is observed.
X: The metal oxide particles are substantially uniformly distributed.

### (2) Turbidity

Each of the obtained laminates was measured for turbidity (haze value) with a haze meter and evaluated on the basis of the following ratings. Table 2 shows the results.
○: The haze value is 1 % or less.
Δ: The haze value is 3 % or less.
X: The haze value is 5 % or more.

### (3) Adhesion

The obtained cured films were subjected to a cross-cut adhesion test according to JIS K5400 and evaluated on the basis of the following ratings. Table 2 shows the results.
○: No peeling was observed in 100 cross-cut squares.
Δ: Peeling of 1 to 3 cross-cut squares was observed in 100 cross-cut squares.
X: Peeling of 4 or more cross-cut squares was observed in 100 cross-cut squares.

### (4) Anti-reflective properties

Each of the obtained anti-reflection laminates was measured for a reflectance in a wavelength region of 340 to 700 nm with a spectral reflection measuring apparatus (automatic spectrophotometer U-3410 integrated with a large sample chamber integrating sphere accessory 150-09090, supplied by Hitachi, Ltd.) to evaluate the laminates for anti-reflective properties. Specifically, the reflectance on a vapor-deposited aluminum film was taken as a standard (100 %), and an anti-reflection laminate (anti-reflection film) was measured for a reflectance at each wavelength. The anti-reflection laminate was evaluated for anti-reflection properties using its reflectance at a wavelength of 550 nm on the basis of the following ratings.
○: The reflectance is 0.5 % or less.
Δ: The reflectance is 1 % or less.
X: The reflectance is 2 % or less.

### (5) Scratch resistance test (steel wool resistance)

A cured film was tested for steel wool resistance according to the following method. That is, a steel wool (BON STAR No. 0000, supplied by Nippon Steel Wool K.K.) was attached to a color fastness rubbing tester (AB-301, supplied by TESTER SANGYO CO., LTD.), and the surface of a cured film was repeatedly rubbed 10 times under a condition of a load of 200 g and then visually observed for scratches on the surface of the cured film. The result was evaluated on the basis of the following ratings.
⊚: Peeling of a cured film or the occurrence of scratch was scarcely found.
○: Thin scratches are observed on a cured film.
X: A cured film is partly peeled, or streaky scratches occur on the cured film surface.

### (6) Evaluation for wipeability

In an environment at a temperature of 23°C and at a relative humidity of 30 %, a non-woven fabric (BEMCOT S-2, supplied by Asahi Kasei Kogyo K.K.) was caused to slide uniformly on the entire surface of a cured film five times, and then, finely cut cellulose fibers were caused to adhere to the surface by dispersing. Then, the cured film surface was wiped with a clean non-woven fabric. The finely cut fibers adhering to the surface of the above cured film were visually evaluated for a remaining amount thereof, and the surface was evaluated on the basis of the following ratings.
⊚: The finely cut fibers are nearly completely wiped off.
○: The amount of remaining finely cut fibers that are not wiped off is small.
X: Most of the finely cut fibers remain on the sample surface without being wiped off.

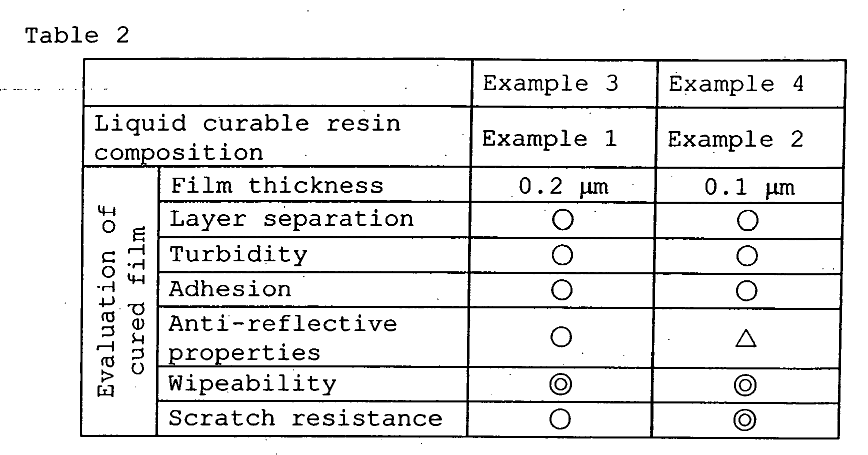

### Industrial Utility

Concerning the cured film obtained by curing the liquid resin composition of the present invention, a high-refractive film and a low-refractive film can be formed on a substrate from the liquid resin composition by a single application step, so that the process for producing a cured film having a bilayer structure can be simplified. The liquid resin composition of the present invention can be therefore used particularly advantageously for forming optical materials such as an anti-reflection film and optical fiber-cladding material. Further, having a high fluorine content, the liquid resin composition of the present invention can be suitably used as a painting material for a substrate that is required to have weather resistance, a material for weather-resistant film, a coating material, and other application materials. Furthermore, the above cured film is excellent in adhesion to a substrate, has high scratch resistance and can impart the substrate with a good anti-reflective effect, so that it is significantly useful as an anti-reflection film and can improve viewability when applied to various types of display units.

## Claims

1. A liquid resin composition comprising the following components (A), (B), (C) and (D):
(A) fluorine-containing polymer
(B) curable compound
(C) metal oxide particles having a number average particle size of 100 nm or less
(D) solvent.

2. The liquid resin composition according to claim 1, wherein the metal oxide particles are those mainly containing of one or more kinds of metal oxides selected from the group consisting of titanium oxide, zirconium oxide, antimony-doped tin dioxide, tin-doped indium oxide, silicon dioxide, aluminum oxide, cerium oxide, zinc oxide, tin oxide, antimony-doped zinc oxide and indium-doped zinc oxide.

3. The liquid resin composition according to claim 1 or 2, wherein the metal oxide particles are metal oxide particles each having a multitiered structure.

4. A cured film obtained by curing the liquid resin composition recited in claim 1 or 2.

5. The cured film according to claim 4, which has a bilayer structure consisting of one layer in which a high density of the component (C) is present and a layer in which the component (C) is not substantially present or a low density of the component (C) is present.

6. A method for producing a cured film, which comprises the step of curing the liquid resin composition recited in claim 1 or 2 by heating or exposure to radiation.

7. A laminate comprising at least one layer formed of the cured film recited in claim 4 on a substrate.

8. The laminate according to claim 7, which comprises another layer interposed between the layer formed of the cured film and the substrate.

9. The laminate according to claim 8, wherein the other layer is one or more layers selected from the group consisting of a hard coat layer, a layer having a refractive index of 1.5 to 1.7, and a combination of a layer having a refractive index of 1.3 to 1.5 and a layer having a refractive index of 1.6 to 2.2.

10. The laminate according to any one of claims 7 to 9, wherein the substrate is made of triacetyl cellulose, a polyethylene terephthalate resin, a polycarbonate resin, an acrylic resin, an acryl/styrene copolymer resin, a polyolefin resin, a norbornene resin, or glass.

11. The laminate according to any one of claims 7 to 9, which is a part for optical use.

12. The laminate according to any one of claims 7 to 9, which is used for an anti-reflection film.
